# EUROPEAN PATENT SPECIFICATION

(11) **EP 1 366 573 B1**
(45) Date of publication and mention of the grant of the patent: **17.06.2009**
(21) Application number: 02710624.4
(22) Date of filing: 01.02.2002
(51) Int. Cl.: H04B 1/00

(54) **METHOD AND SYSTEM FOR RECEIVER-CHARACTERIZED POWER SETTING IN A CELLULAR COMMUNICATION SYSTEM**
VERFAHREN UND SYSTEM FÜR DURCH DEN EMPFÄNGER GEKENNZEICHNETE LEISTUNGSEINSTELLUNG IN EINEM ZELLULAREN KOMMUNIKATIONSSYSTEM
PROCEDE ET DISPOSITIF SERVANT A REGLER LA PUISSANCE D'EMISSION SELON LE RECEPTEUR DANS UN SYSTEME DE COMMUNICATION CELLULAIRE

(30) Priority: 02.02.2001 US 265613 P; 30.01.2002 US 58402
(43) Date of publication of application: 03.12.2003
(73) Proprietor: TELEFONAKTIEBOLAGET LM ERICSSON (publ), 164 83 Stockholm (SE)
(72) Inventor: KRONESTEDT, Fredric, S-254 50 Helsingborg (SE); LINDHEIMER, Christofer, S-164 42 Kista (SE); MAZUR, Sara, S-167 71 Bromma (SE)
(74) Representative: Kühn, Friedrich Heinrich
(86) International application number: PCT/SE2002/000192
(87) International publication number: WO 2002/061954

(56) References cited:
- US-A- 5 982 766
- US-A- 6 097 965
- US-B1- 6 360 199

## Description

### BACKGROUND

### Field of the Invention

The present invention relates generally to wireless communication. More specifically, the present invention relates to a method and system for receiver-characterized power setting in a cellular communication system.

### Background Information

The cellular telephony industry is presently experiencing extreme subscriber growth. The number of cellular telephony users is increasing at a rate comparable or higher to that of Internet usage and web browsing. Even though the most intense development and evolution of cellular communication today concerns the merger of Internet and mobile telephony i.e., mobile access to the Internet. it is still envisioned that voice services will be a dominant application for many years to come. As the number of cellular subscribers increase, improvements for voice services become increasingly important for all manufacturers and mobile operators. Consequently, solutions arc needed for boosting the radio network capacity and for more efficiently utilizing the limited available spectrum an operator is allowed to use.

In cellular communication systems, reuse patterns are deployed in such a manner that one can reuse the same frequencies in different cells. Systems are usually planned such that a number of cells share a number of available channels. For example, in a 4/12 frequency reuse, there are 12 different cells that share a set of frequencies. Within these 12 cells, no frequency is used in more than one cell simultaneously. (The number 4 in "4/12" denotes the number of base station sites involved in the 12 reuse. The 4/12 notation thus indicates that a base station site serves 3 cells.) These 12 cells form what is referred to as a "cluster." Clusters are then repeated to provide coverage in a certain area. Similarly, in a 1/3 reuse there are 3 different cells that share a set of frequencies. Within these 3 cells, no frequency is used in more than one cell simultaneously.

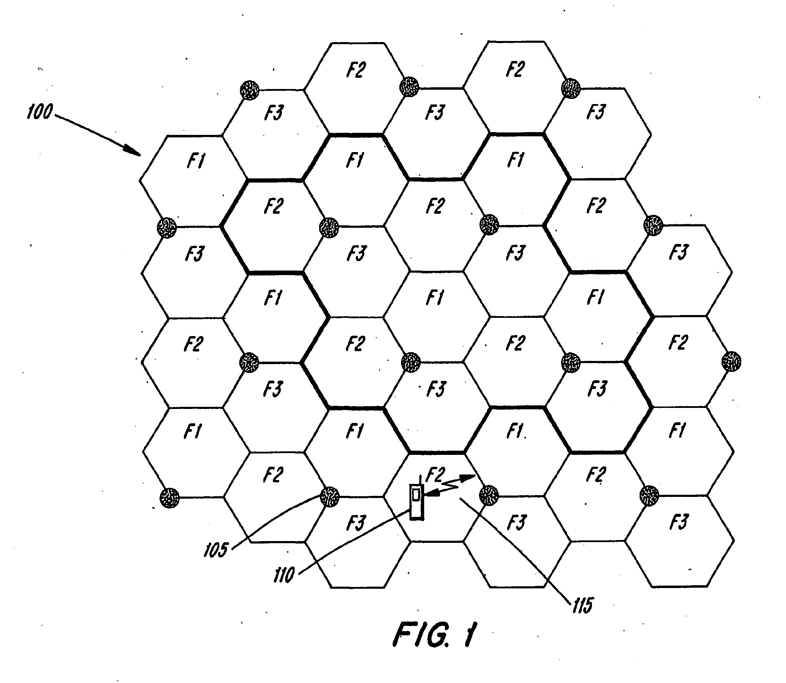

Thus, the lower the reuse (e.g., 4/12), the better the carrier-to-interference ratio for an exemplary condition. The carrier-to-interference (C/I) ratio is a measure of the relation between the wanted signal and the sum of all of the unwanted signals. For higher reuse patterns (e.g., 1/3 or 1/1), the C/I ratio is lower, since the repetition distance between two base stations transmitting on the same frequency is smaller. An example of a 1/3 reuse is illustrated in FIG. 1.

FIG. 1 illustrates an exemplary cellular pattern according to a Global System for Mobile Communications (GSM) radio network 100. GSM uses narrowband time-division multiple access (TDMA) in which frequencies are separated by a 200 kHz carrier spacing. Frequencies are typically planned for use in a certain area, e.g., a cell, and then reused in another area, e.g., another cell, that is remote from the first area. The planning of frequencies aims to introduce sufficient re-use distance such that communication on, for example, F1 in one area does not interfere with communication on F1 in another area. In FIG. 1, a theoretical 1/3 reuse is illustrated. The 1/3 reuse indicates that there are 3 different frequency groups that are repeated throughout the coverage area. Frequencies F1, F2 and F3 are evenly distributed throughout a coverage area, each frequency serving a sub-area, or cell. For ease of explanation and not limitation, the description of FIG. 1 refers to each cell being assigned a frequency. However, it will be recognized that more than one frequency can be assigned per cell. In such a case, F1 F2, and F3 each represent a plurality of frequencies that would be repeated in accordance with the particular reuse pattern being implemented. Further, the notation F1 can also correspond to a certain set of frequencies between which allocations "hop" at certain intervals. This is referred to as a frequency hopping system or frequency hopping allocations.

The frequencies can be planned in any reuse pattern, depending on how much spectrum is available and how much interference can be allowed in the network. The reuse pattern illustrated in FIG. 1 is theoretical. In a real network, cells are non-homogeneous and the reuse pattern can vary due to, for example, variations in topology and geographical conditions. In FIG. 1, a mobile station (MS) 110 is located in a cell served by base station 115 and communicates with the base station 115 using frequency (group) FI. Corresponding to another base station 105, a similar arrangement is found. If the mobile station 110 moves, for example, into a cell served by base station 105, mobile station 110 will start communicating with base station 105 instead, using the frequency (group) assigned for the specific cell to which mobile station 110 has moved.

In the effort to improve capacity, emphasis has been placed on two types of scenarios for which a system can be limited - the blocking limited scenario and the interference limited scenario. In the blocking limited scenario, the capacity is limited, because there are no channels available to allocate to an additional user. For example, in GSM, where communication occurs on channels that are realized on timeslots (or multiples or parts of a timeslot), a new user cannot be allocated any timeslot resources when the timeslot resources are all occupied. It is possible to overcome this limitation by planning the system with a higher reuse pattern, e.g., repeating the frequencies (timeslots) more often and thereby provide for a higher channel availability in each cell. However, a higher interference level is introduced with the higher reuse. As a result, the system is affected by the second type of limitation - the interference limited scenario.

In the interference limited scenario, channels are available, but it is not possible to allocate more users because the C/I ratio will become too low. Consequently, services for one or several of the users cannot be offered with sufficient quality. Interference limited scenarios will work satisfactorily if operators limit the load of the available channels to less than 100 percent, and typically much less. Thus, only a fraction of the number of physical channels allocated in a cell (e.g., a timeslot) may be utilized so as not to introduce more interference than can be allowed in providing services with a sufficient quality level. Generally, the trend in the cellular industry is to move towards interference limited systems to maximize capacity.

Currently, the TDMA-based GSM cellular communication system utilizes a voice codec (coder/decoder) specially designed for the type of radio transmissions that are used in the system. The voice codec presently used is often referred to as GSM Enhanced Full Rate (EFR) codec and is the successor to the "ordinary" GSM Full Rate (FR) voice codec. The GSM EFR codec is designed to perform optimally at the symbol rates available with the GSM radio frequency carriers. With the GSM EFR, a specific binary representation of the speech in terms of more or less significant symbols is used, as well as a specific channel coding for correcting errors inflicted by varying radio conditions. The quality with the GSM EFR codec is improved over that of the earlier generation of voice codecs for GSM (the GSM FR codec) and the EFR codec has proved to be a great success in the mobile communications industry.

The evolution of voice codecs has, however, not ended with the EFR codec. Rather, improvements in speech coding over varying radio channels have been the subject of intense research and new voice codecs have evolved. The generation of voice codecs following the EFR codecs for GSM is generally referred to as Adaptive Multi-Rate (AMR) codecs.

The AMR codec family differs from all previous voice codec generations used in GSM, because the AMR is not just one codec. Rather, the AMR codec is a set of different speech codecs. With the AMR codec, the speech coding and channel coding is optimized based upon the instantaneous quality of the radio link. In this respect, the AMR voice codec includes a set of different codec modes that are selected at different instants. The codec mode selected is based upon, for example, reported measurements of the radio conditions or of the perceived quality. The procedure for selecting the codec mode that is most suited for a certain radio channel condition is called "link adaptation." The AMR codec is more thoroughly characterized in the GSM specification document ETSI TR 1,01 714 specification GSM 06.75, version 7.2.0, April 2000.

While the EFR codec provides adequate voice quality at a certain radio channel condition, usually characterized or quantized in a C/I ratio, the AMR codec can provide the same voice quality at a much lower C/I ratio. Thus, the AMR codec is less sensitive to interference. For any given C/I value, the AMR codec provides equal or better voice quality than the GSM EFR codec.

For the EFR codec, the amount of speech coding output symbols (i.e., the binary representation of the speech) is always the same and the amount of channel protection (i.e., channel coding) is always the same. With the AMR codec, however, it is possible to select different codec modes dependent upon the quality of the radio channel. Different codec modes have different amounts of channel coding and different amounts of symbols representing the speech (i.e., voice codec output). For example, for a channel condition with a low quality, i.e.. with a large amount of interference, the AMR codec can select a codec mode where the speech is represented by only a few symbols and where the channel protection (channel coding) is stronger (i.e., the major part of the transmission may be channel coding bits). For a channel condition with a high quality, i.e., with a small amount of interference, the AMR codec can select a codec mode where the speech is represented by a larger amount of symbols and where less transmission resources are spent on channel protection (channel coding). In this way, the AMR codec can better adapt to the instantaneous channel quality and better follow, for example, the varying conditions in a cellular communication system. This adaptation to the channel quality allows the AMR codec to provide a better speech quality in a wider range of channel conditions. Thus, the degradations sometimes experienced with the EFR codec can be better handled with the AMR codec.

In terms of increasing system capacity, the AMR technique can be viewed as a feature that provides the same quality as the GSM EFR codec, but at a lower C/I level. In an interference limited system, this can be translated into a higher capacity. However, the AMR codec is not implemented in all mobiles in use in a cellular system. For example, all mobiles that are in use today lack the AMR functionality.

A mobile station with the AMR codec will typically have a more robust radio connection with a base station. A lower Frame Erasure Rate (FER) or Block Error Rate (BLER) will be experienced for any given average C/L In other words, a lower C/I can be tolerated for a given FER or BLER target. The users with a new mobile station that includes the AMR codec will experience a higher quality, but the interference contribution from a new mobile station will be the same as for an old mobile station, as long as the transmission powers are the same. If AMR and EFR connections are operated in a common frequency band, it is thus not possible to directly translate the quality increase into, e.g., any general capacity increase since older (EFR) mobile stations will not experience increased quality. Increasing the number of users will, therefore, result in a negative impact on old mobile stations.

One possible solution can be to divide the available spectrum into a spectrum for old mobile stations and a spectrum for new mobile stations. It would then be possible to increase the capacity in the part of the spectrum serving the new mobile stations that have the AMR codec functionality. This is, however, not desirable, because it will require a re-engineering of spectrum when the frequency band split is performed. There will also be a loss of trunking efficiency, since both new and old mobile stations will have to share fewer frequencies than without a frequency split, which will increase the blocking rate. In addition, if frequency hopping were implemented in a system where the available spectrum is split, there will be a loss in the frequency and interference diversity, since the gain from frequency hopping is highly dependent on the number of frequencies used for hopping. Furthermore, the capacity gain will only be for the new mobile stations, as it is not possible to increase the capacity in the part of the spectrum associated with the old mobile stations.

Another consideration with regards to the AMR codec and the high voice quality at low C/I ratios is that even though the speech channels have experienced a positive evolution in increased robustness, similar improvements have not been designed for the control channels associated with speech communication. Thus, for speech communication utilizing the AMR codec, a user may have excellent voice quality, but may still be dropped or loose the call due to control signaling failures. The associated control signaling robustness is designed to work well with the channel conditions acceptable for the GSM EFR codec, but the significantly lower C/I ratios that the AMR can handle arc too poor for the associated control channels.

Also US 66208873 relates to fast power control in a CDMA system.

It would be desirable to introduce mobile stations with the AMR codec functionality into a cellular system such that capacity gains can be realized in a spectrum shared with mobile stations lacking the AMR codec functionality. In addition, it would be desirable to find a solution that addresses the robustness of the associated control channels and that decreases the risk that a call may be lost or dropped due to control signaling failure.

### SUMMARY OF THE INVENTION

A method and system are disclosed for receiver-characterized power setting in a cellular communication system. In accordance with exemplary embodiments of the present invention, a first transmission power is set for a first connection with a first type of mobile station. The first connection targets a first radio channel quality. A second transmission power is set for a second connection with a second type of mobile station. The second connection targets a second radio channel quality. The first type of mobile station uses a first type of speech unit that is less robust to poor radio channel quality than a second type of speech unit used by the second type of mobile station. The first and second transmission powers are set according to at least a type of speech unit used by the first and second types of mobile stations, respectively. when transmitting speech.

The present invention is defined by the features of claim 1.

### BRIEF DESCRIPTION OF THE DRAWING FIGURES

Other objects and advantages of the present invention will become apparent to those skilled in the art upon reading the following detailed description of preferred embodiments, in conjunction with the accompanying drawings, wherein like reference numerals have been used to designate like elements, and wherein:
FIG. 1 illustrates an exemplary 1/3 cellular reuse pattern.
FIG. 2 illustrates a reference model of a GSM/GPRS cellular communication system.
FIGS. 3A and 3B illustrate the steps for receiver-characterized power setting in a cellular communication system in accordance with exemplary embodiments of the present invention.
FIG. 4 illustrates a voice codec device in accordance with an exemplary embodiment of the present invention.
FIG. 5 illustrates a system for receiver-characterized power setting in a cellular communication system in accordance with an exemplary embodiment of the present invention.
FIG. 6 illustrates a power control device in accordance with an exemplary embodiment of the present invention.
FIG. 7 illustrates the different radio quality targets for AMR voice codec quality, AMR voice codec associated control signaling quality, EFR voice codec quality, and EFR voice codec associated control signaling quality in accordance with an exemplary embodiment of the present invention.
FIG. 8 illustrates a histogram of a power distribution for EFR and AMR mobile stations in accordance with an exemplary embodiment of the present invention.
FIG. 9 illustrates an exemplary radio channel quality mapping in accordance with exemplary embodiments of the present invention.

### DETAILED DESCRIPTION OF THE PREFERRED EMBODIMENTS

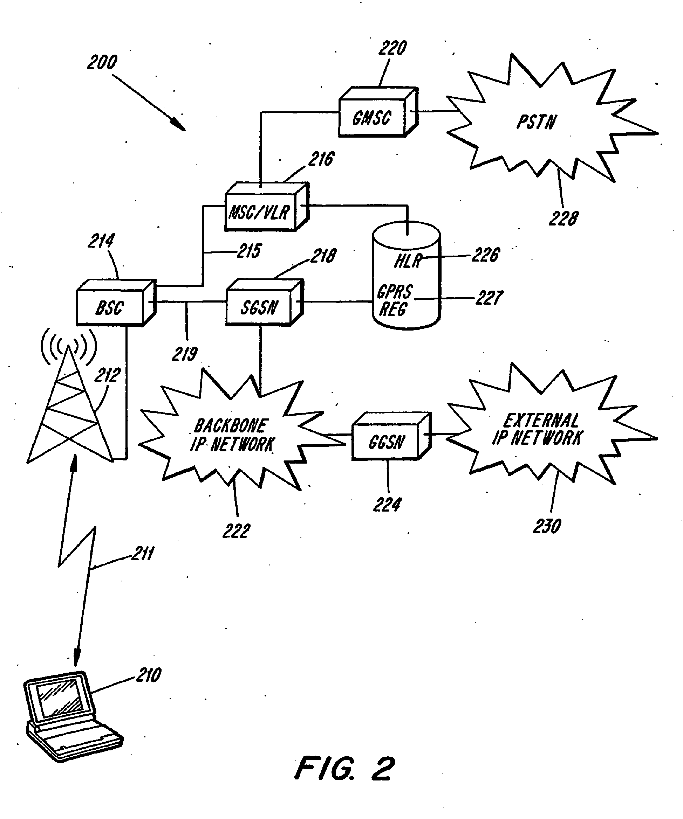

FIG. 2 illustrates a reference model of a GSM/GPRS cellular communication system. As shown in FIG. 2, a mobile telecommunications system 200 includes a circuit switched part and a packet switched part. According to exemplary embodiments, the circuit switched part is a Global System for Mobile Communications (GSM) circuit switched communication system and the packet switched part is a General Packet Radio Service (GPRS) based packet switched communication system. Generally, the circuit-switched network is primarily used for voice applications. In accordance with third generation mobile telecommunications evolution, however, the circuit-switched network can also support data communications, and the packet-switched network can also support voice communications.

The circuit-switched network includes a number of nodes, e.g., Mobile Switching Center/Visitor Location Registers (MSC/VLRs) 216. For purposes of simplifying the illustration, only one MSC/VLR 216 is shown. Each MSC/VLR 216 serves a particular geographic region and is used for controlling communications in the served region and for routing communications to other MSC/VLRs (not illustrated). The VLR portion of the MSC/VLR 216 stores subscriber information relating to mobile stations 210 that are currently located in the served region. Although mobile station 210 is illustrated as a computer, any mobile communication device can be used, e.g., voice terminals. The circuit-switched network further includes at least one gateway mobile switching center (GMSC) 220 that serves to connect the circuit-switched network with external networks, such as, for example, a public switched telephone network (PSTN) 228.

The packet-switched network includes at least one serving GPRS support nodes (SGSN) 218 that is used for routing and controlling packet data communications, and a backbone IP network 222. A gateway GPRS support node (GGSN) 224 connects the packet-switched network with an external IP network 230 or other external data networks.

The radio network includes a plurality of cells. Each cell in the mobile telecommunications system 200 is served by a base station 212 that communicates with mobile stations 210 in the cell via an air interface 211. A radio base station controller (BSC) 214 controls a plurality of base stations 212. For circuit-switched communications, signals are routed from the MSC/VLR 216 to the BSC 214 via an A-interface 215. Signals can be further routed down to the base station 212 for the cell in which the target mobile station 210 is currently located, and over the air interface 211 to the mobile station 210. For packet data transmissions, however, signals are routed from the SGSN 218 to the BSC 214 via a Gb-interface 219. Signals can be further routed down to the base station 212 for the cell in which the target mobile station 210 is currently located, and over the air interface 211 to the mobile station 210.

Each mobile station 210 is associated with a home location register (HLR) 226. The HLR 226 stores subscriber data for the mobile station 210 that is used in connection with circuit-switched communications and can be accessed by the MSC/VLRs 216 to retrieve subscriber data relating to circuit-switched services. Each mobile station 210 is also associated with a GPRS register 227. The GPRS register 227 stores subscriber data for the mobile station 210 that is used in connection with packet-switched communications and can be accessed by the SGSNs 218 to retrieve subscriber data relating to packet-switched services.

Voice and data communications can be sent via the air interface 211 using one or more time slots. In many cases, each time slot is allocated to a single mobile station 210 for use in receiving communications from, and transmitting communications to, the base station 212.

In mobile telecommunications system 200, a voice codec can be located in the base station 212, in the BSC 214, or farther up in the network. Furthermore, the base station 212 and the mobile station 210 can include features for handling frequency hopping allocations. A frequency hopping allocation refers to a resource allocation for a certain connection that includes several frequencies in which the connection, in a pseudo-randomized or controlled manner, switches between different frequencies at a certain rate. There are several advantages to using frequency hopping. One advantage is that it is possible to achieve a frequency diversity in a connection. For example, if a mobile station is geographically positioned such that a certain frequency shows low performance due to frequency-related multi-path fading, this situation will change and generally improve at the speed of the frequency hopping rate. Another advantage is that if a certain allocation is experiencing a very strong interfering signal, this situation will also change with the frequency hopping rate as long as the interferer does not frequency hop synchronously. Thus, the frequency hopping mechanism can be viewed as a distributor of interference- and frequency-related fading, such that no single connection continuously experiences a bad radio channel quality.

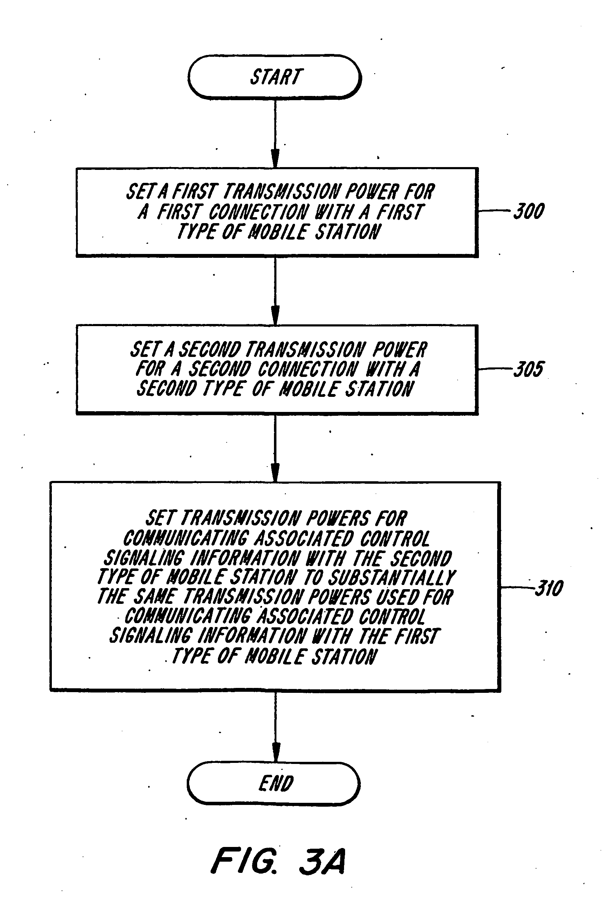

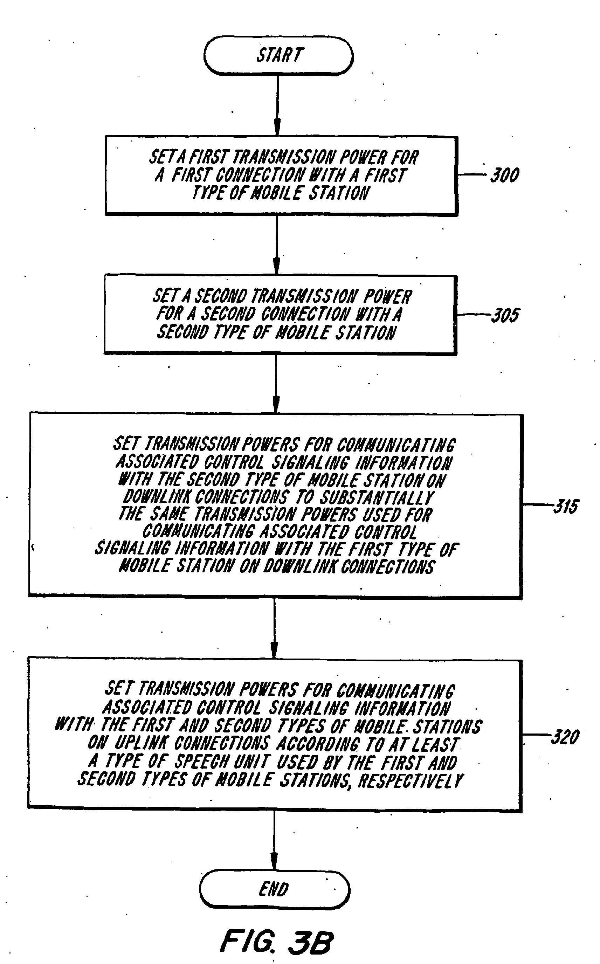

FIGS. 3A and 3B illustrate the steps for controlling transmission powers in a cellular communication system. In FIG. 3A, in step 300, a first transmission power is set for a first connection with a first type of mobile station. The first connection targets a first radio channel quality. In step 305, a second transmission power is set for a second connection with a second type of mobile station. The second connection targets a second radio channel quality. The first type of mobile station uses a first type of speech unit that is less robust to poor radio channel quality than a second type of speech unit used by the second type of mobile station. The first and second transmission powers are set according to at least the type of speech unit used by the first and second types of mobile stations, respectively, when transmitting speech. According to exemplary embodiments of the present invention, the first type of speech unit used by the first type of mobile station is an Enhanced Full Rate (EFR) voice codec unit, and the second type of speech unit used by the second type of mobile station is an Adaptive Multi-Rate (AMR) voice codec unit. The first and second types of mobile stations can have, for example, different receiver characteristics.

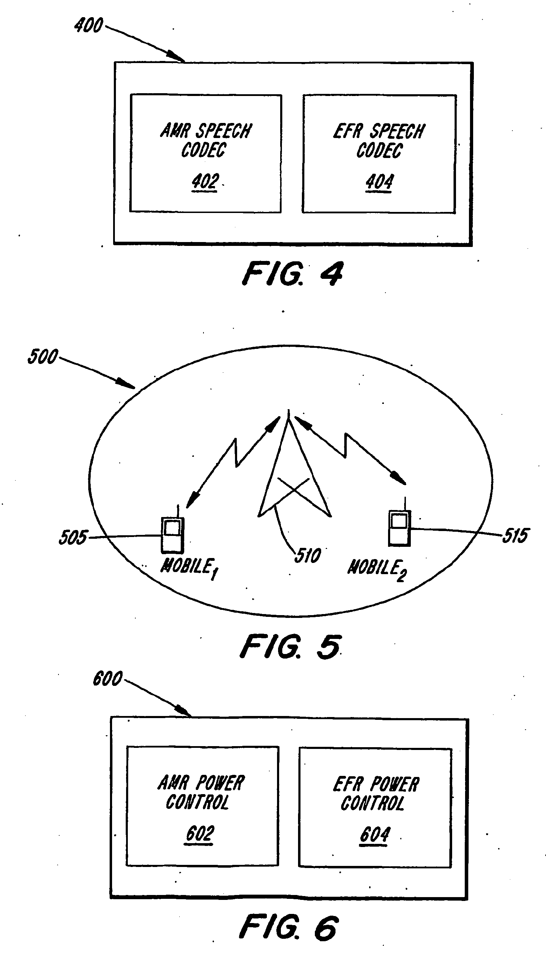

The mobile telecommunications system 200 can support voice communication using a number of different voice codecs. FIG. 4 illustrates a voice codec device according to an exemplary embodiment of the present invention. In FIG. 4, a voice codec device 400 can enable either or both GSM EFR speech communication and GSM AMR speech communication. As shown in FIG. 4, the voice codec device 400 includes both an AMR voice codec 402 and an EFR voice codec 404. However, skilled artisans will recognize that voice codec device 400 can alternatively include either AMR voice codec 402 or EFR voice codec 404. For a certain connection, the use of either the AMR voice codec 402 or the EFR voice codec 404 is dependent on the capabilities of the mobile station device involved in the connection.

According to exemplary embodiments, the first and second types of mobile stations share substantially the same frequency band for the first and second connections. In addition, frequency hopping allocations can be used for the first and second connections. Applying frequency hopping to the connections can lead to a reduced interference for all users within the spectrum used. The frequency hopping can distribute the interference contributions from all users evenly over all carriers used in an allocation, which can lead to a capacity gain for all types of mobiles, i.e., independent of AMR codec capability. By using a combination of a shared frequency band, frequency hopping, and power control, a radio channel quality gain can be achieved for both EFR-equipped and AMR-equipped mobile stations, that can be used for increasing the network capacity for both types of mobile stations. Furthermore, there will be no changes necessary to the radio network in terms of dividing the spectrum into one part used for connections with AMR mobile stations and another part used for connections with EFR mobile stations. The trunking is also maintained, since no spectrum division is necessary.

The first and second radio channel qualities can correspond to, for example, a desired carrier-to-interference (C/I) ratio or any other form of radio channel quality measure. According to exemplary embodiments, the second radio channel quality is substantially lower than the first radio channel quality. In such an embodiment, two different radio quality targets are used for the power control feature of the present invention - a high radio channel quality target for mobile stations equipped with the EFR voice codec (i.e., the "old" mobile stations) and a lower radio channel quality target for mobile stations equipped with the AMR voice codec (i.e., the "new" mobile stations).

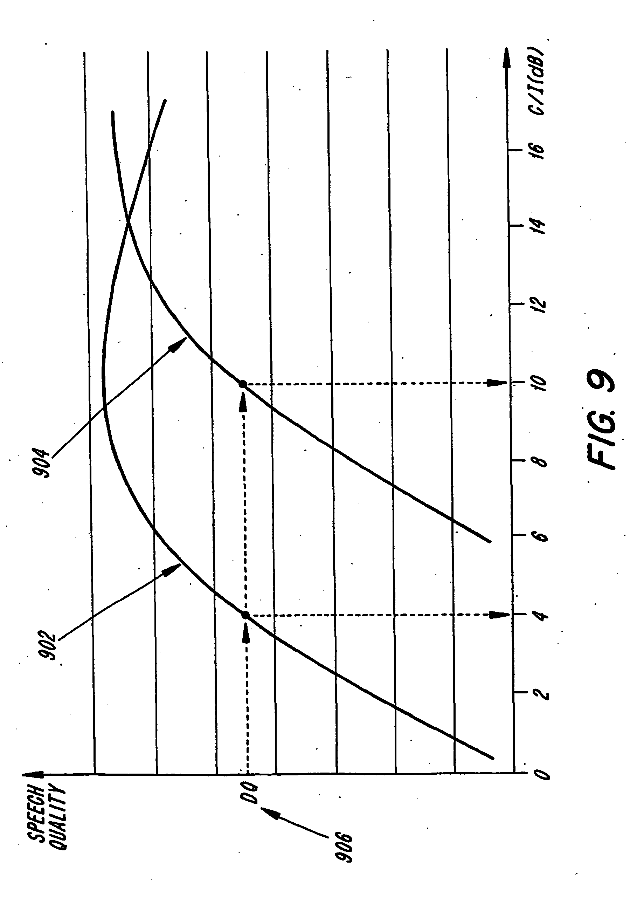

According to an alternate exemplary embodiment, the radio channel quality used for "old" mobile stations can be used for both "old" and "new" mobile stations. In such an alternate embodiment, two different radio channel quality mappings are needed. The second radio channel quality is mapped from a corresponding first radio channel quality. For example, FIG. 9 illustrates an exemplary radio channel quality mapping in accordance with exemplary embodiments of the present invention. As shown in FIG. 9, a mapping of C/I to speech quality can be used, although skilled artisans will recognize that any quality measure can be used for the mapping, for example, bit error rate (BER) to speech quality, and that the mapping illustrated in FIG. 9 is for purposes of illustration and not limitation. According to FIG. 9, a certain level of speech quality DQ 906 is desired. To fulfill speech quality level DQ 906 for an AMR mobile station (i.e., the second type of mobile station, represented as curve 902), the power control feature according to exemplary embodiments of the present invention strives for a C/I of, for example, 4 dB. However, to fulfill the same speech quality level DQ 906 for an EFR mobile station (i.e., the first type of mobile station, represented as curve 904), the power control feature strives for a C/I of, for example, 10 dB. The user-perceived quality of the second radio channel quality for the second type of mobile station corresponds to substantially the same user-perceived quality of the first radio channel quality for the first type of mobile station.

Thus, the radio quality experienced by an AMP mobile station is translated to a virtual radio channel quality for an EFR mobile station, and the radio channel quality target for the EFR mobile stations can remain unchanged. Consequently, as illustrated in FIG. 9, for, for example, the C/I estimated for an AMR mobile station, the power control feature can use, for example, a higher value in order to mimic an EFR mobile station in the radio channel quality filtering process. The power control target for the EFR mobile stations can still be used and no new radio channel quality target is needed, since the AMP mobile stations are given a radio channel quality corresponding to that targeted by the EFR mobile stations. Thus, no new radio channel quality parameter is required in mobile station product implementations.

In addition to different radio quality targets, two power spans (i.e., the difference between maximum and minimum allowed power) can be used for the AMR- and EFR-equipped mobile stations. The power control feature according to exemplary embodiments of the present invention can reduce the power for an AMR mobile station below the minimum power for an EFR mobile station. In addition, AMR mobile stations can use a lower power than the EFR mobile stations to exploit full interference reduction, such as when the radio channel quality gain with the AMR mobile stations is large, e.g., 6 dB for AMR mobile stations compared to EFR mobile stations. In such an example, the average power for the AMR mobile stations should be approximately 6 dB smaller than the corresponding value for EFR mobile stations. Thus, according to exemplary embodiments, the minimum power used for the second connection with the second type of mobile station (the AMR mobile station) is lower than the minimum power used for the first connection with the first type of mobile station (the EFR mobile station).

According to an alternate exemplary embodiment of the present invention, a power control mechanism for regulating output power in the downlink direction (from the base station to the mobile station) is at least partially based on the type of voice codec used for the connection when transmitting speech. If a downlink voice communication utilizes an AMR codec, the power control target for that connection is set to a substantially lower value than a downlink voice communication where an EFR codec is utilized. The difference in power control target can be determined by, for example, a user perceived speech quality target. In the particular case of the AMR and EFR codecs, the quality that is achieved at, for example, a certain C/I with the EFR codec is achieved at a lower C/I with the AMR codec. The power control target for the AMR codec can be decreased by a substantially corresponding amount for the AMR codec relative to the EFR codec power control target. In this context, the power control target is actually a translation of a radio channel quality, for example, in terms of C/I. The C/I ratio is, however, directly affected by the power control target in any given case.

Together with frequency hopping, the power control strategy according to exemplary embodiments of the present invention can allow for the addition of more users to a cellular communication system, since the contribution of interference per user is decreased with the down-regulated AMR codec mobile stations. With the frequency hopping allocations, the interference gain is distributed along the complete spectrum. If several types of mobile stations are used in the same spectrum, a capacity gain can be realized such that, for example, either more AMR mobile stations can be allowed into the system or more EFR mobile stations can be allowed into the system.

A similar strategy is applied for the uplink direction, where a base station commands the mobile stations to set the power for uplink transmissions. Consequently, a base station can control uplink transmissions at least partially based on the voice codec type used in a connection when transmitting speech. Mobile stations communicating speech with an AMR codec are thus instructed to use an output power that is substantially lower than that used by mobile stations communicating speech with a voice codec that is less robust than the AMP codec.

In GSM, a handover is performed when a mobile station moves between two cells. The handover protocol transmits handover control signaling information using the FACCH (Fast Associated Control Channel). Currently, the FACCH is designed for operation with the EFR voice codec. Consequently, handover signaling may degrade when operated with an AMR voice codec, since an AMR voice codec is more robust and is less susceptible to interference.

To address this situation, according to an exemplary embodiment of the present invention, in step 310 of FIG. 3A, the transmission powers for communicating associated control signaling information with the second type of mobile station are set to substantially the same transmission powers used for communicating associated control signaling information with the first type of mobile station. For example, the transmission power of associated control signaling information for connections using the AMR voice codec can be set to the same power control target as that used for connections where the EFR voice codec is used. The transmission powers for communicating associated control signaling information with the second type of mobile station (e.g., AMR mobile stations) correspond to the maximum allowed power of the first type of mobile station (e.g., EFR mobile stations).

When communicating associated control signaling information to a mobile station with AMR capability, a base station increases the output power to the output power that would be used for communicating associated control information to a mobile station with a less robust codec than the AMR codec. During a connection utilizing an AMR codec, when communicating associated control signaling information to a base station, a mobile station with AMR capability increases the output power to the output power that would be used for communicating associated control signaling information from a mobile station with a less robust codec than the AMR codec. This provides for the transmission of associated control signaling information with the same quality and performance as the associated control signaling information transmitted for mobiles using less robust voice codecs than the AMR codec.

According to this embodiment, there will be substantially no quality decrease of the control signaling information for the AMR mobile stations and, for example, important control signaling information, e.g., handover signaling information, can be carried with the same quality as if the system were serving only EFR mobile stations. Associated control channels that can be power controlled in the same way irrespective of voice codec used include the FACCH and the Slow Associated Control Channel (SACCH). The same principles can be used with other associated control channels.

FIG. 3B illustrates an alternate exemplary embodiment of the present invention for controlling the transmission powers for communicating control signaling information. Steps 300 and 305 are the same as those illustrated in FIG. 3A. However, in step 315 of FIG. 3B, transmission powers for communicating associated control signaling information with the second type of mobile station on downlink connections are set to substantially the same transmission powers used for communicating associated control signaling information with the first type of mobile station on downlink connections. In step 320, transmission powers for communicating associated control signaling information with the first and second types of mobile stations on uplink connections are set according to at least a type of speech unit used by the first and second types of mobile stations, respectively. Thus, when communicating associated control signaling information to a mobile station with AMR capability, a base station increases the output power to the output power that would be used for communicating associated control information to a mobile station with a less robust codec than the AMR codec.

According to this alternate embodiment, the downlink transmissions of associated control signaling information are transmitted with a power that corresponds to the power used for transmitting associated control information in the downlink on a connection utilizing an EFR codec. The uplink transmissions of associated control signaling information can instead rely on advanced receiver algorithms and methods, since it is much easier to implement these type of features in the base station than in the mobile stations. For example, in mobile stations using the AMR voice codec for speech transmissions, the EFR power control target can be used in the downlink connection for associated control signaling information, while, for example, Interference Rejection Combining (IRC) can be used to improve the performance of the uplink connection for transmitting associated control signaling information. Other types of receiver techniques that improve uplink performance can also be used.

FIG. 5 illustrates a system for controlling transmission powers in a cellular communication system in accordance with an exemplary embodiment of the present invention. FIG. 5 shows a cell 500, where a base station 510 serves MOBILE₁ 505 with a voice communication call utilizing the AMR voice codec, and additionally serves MOBILE₂ 515 with voice communication call utilizing a GSM EFR voice codec. The quality target (in terms of perceived speech quality) for MOBILE₁ 505 is the same as for MOBILE₂ 515.

The system for controlling transmission powers can include a first type of mobile station (e.g., MOBILE₁) 505), wherein the first type of mobile station includes a first type of speech unit, and wherein a first connection with the first type of mobile station targets a first radio channel quality. The system includes a second type of mobile station (e.g., MOBILE₂ 515), wherein the second type of mobile station includes a second type of speech unit, and wherein a second connection with the second type of mobile station targets a second radio channel quality. The first type of speech unit of the first type of mobile station is less robust to poor radio channel quality than the second type of speech unit of the second type of mobile station. The transmission powers for the first and second connections are set according to at least a type of speech unit used by the first and second types of mobile stations, respectively, when transmitting speech. According to exemplary embodiments of the present invention, the first type of speech unit used by the first type of mobile station is an EFR voice codec unit, and the second type of speech unit used by the second type of mobile station is an AMR voice codec unit. The system also includes a base station (e.g., base station 510) that communicates with the first and second types of mobile stations.

According to exemplary embodiments, the first and second types of mobile stations share substantially the same frequency band for the first and second connections. In addition, frequency hopping allocations can be used for the first and second connections. According to exemplary embodiments, MOBELE₂ 515 (i.e., the AMR mobile station) can have a power control target for its connection in both uplink and downlink directions that is substantially lower than the power control target for the connection to MOBILE₁ 505 (i.e., the EFR mobile station) in both uplink and downlink directions.

The first and second radio channel qualities and power control target can correspond to, for example, a desired carrier-to-interference (C/I) ratio or any other form of radio channel quality measure. According to exemplary embodiments, the second radio channel quality is substantially lower than the first radio channel quality. In such an embodiment, two different radio quality targets are used for the power control feature of the present invention a high radio channel quality target for mobile stations equipped with the EFR voice codec (i.e., the first type of mobile stations) and a lower radio channel quality target for mobile stations equipped with the AMR voice codec (i.e., the second type of mobile stations).

According to an alternate exemplary embodiment, the radio channel quality used for EFR mobile stations can be used for both EFR and AMR mobile stations. In such an alternate embodiment, two different radio channel quality mappings are needed, for example, bit error rate to speech quality, or any other form of radio channel quality measure. The second radio channel quality is mapped from a corresponding first radio channel quality. The user-perceived quality of the second radio channel quality for the second type of mobile station corresponds to substantially the same user-perceived quality of the first radio channel quality for the first type of mobile station. According to exemplary embodiments, the minimum power used for the second connection with the second type of mobile station (the AMR mobile station) is lower than the minimum power used for the first connection with the first type of mobile station (the EFR mobile station).

According to an exemplary embodiment of the present invention, the transmission powers for communicating associated control signaling information with the second type of mobile station are set to substantially the same transmission powers used for communicating associated control signaling information with the first type of mobile station. Thus, the transmission power of associated control signaling information for connections using the AMR voice codec is set to the same power control target as that used for connections where the EFR voice codec is used. The transmission powers for communicating associated control signaling information with the second type of mobile station correspond to the maximum allowed power of the first type of mobile station.

According to an alternate exemplary embodiment of the present invention, transmission powers for communicating associated control signaling information with the second type of mobile station on downlink connections are set to substantially the same transmission powers used for communicating associated control signaling information with the first type of mobile station on downlink connections. The transmission powers for communicating associated control signaling information with the first and second types of mobile stations on uplink connections are set according to at least a type of speech unit used by the first and second types of mobile stations, respectively.

Thus, according to exemplary embodiments of the present invention, a power control unit controls the power of connections differently where the AMR voice codec is used than for connections where the GSM EFR voice codec is used. FIG. 6 illustrates a power control device according to an exemplary embodiment of the present invention. In FIG. 6, a Power Control Unit 600 has as an input parameter at least the type of voice codec used in a target communication. Although the illustration in FIG. 6 indicates a power control unit 600 divided into one power control part for an AMR power control 602 and one power control part for an EFR power control 604, the same power control part can handle both types of regulation through, for example, a power control feature that uses at least the voice codec type as an input parameter.

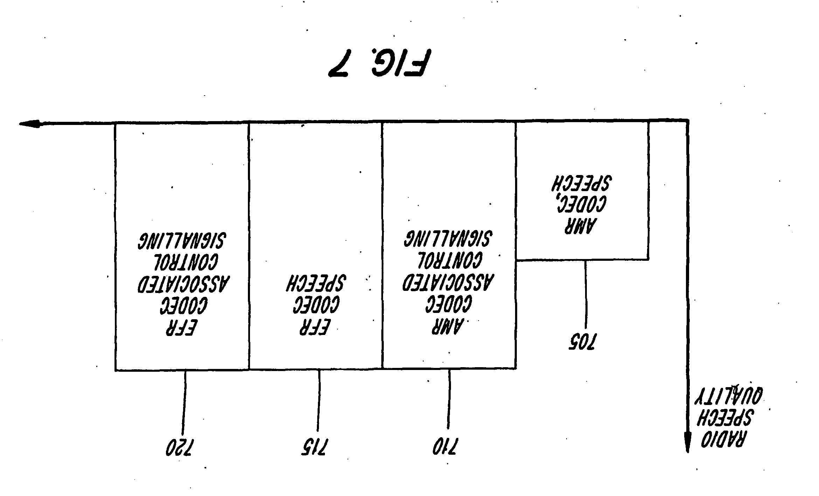

FIG. 7 illustrates the target radio qualities for the different types of transmissions according to exemplary embodiments of the present invention. As shown in FIG. 7, the target radio qualities for the AMR voice codec associated control signaling quality 710, EFR voice codec quality 715, and EFR voice codec associated control signaling quality 720 are substantially equivalent, and each greater than the target radio quality for a AMR voice codec quality 705.

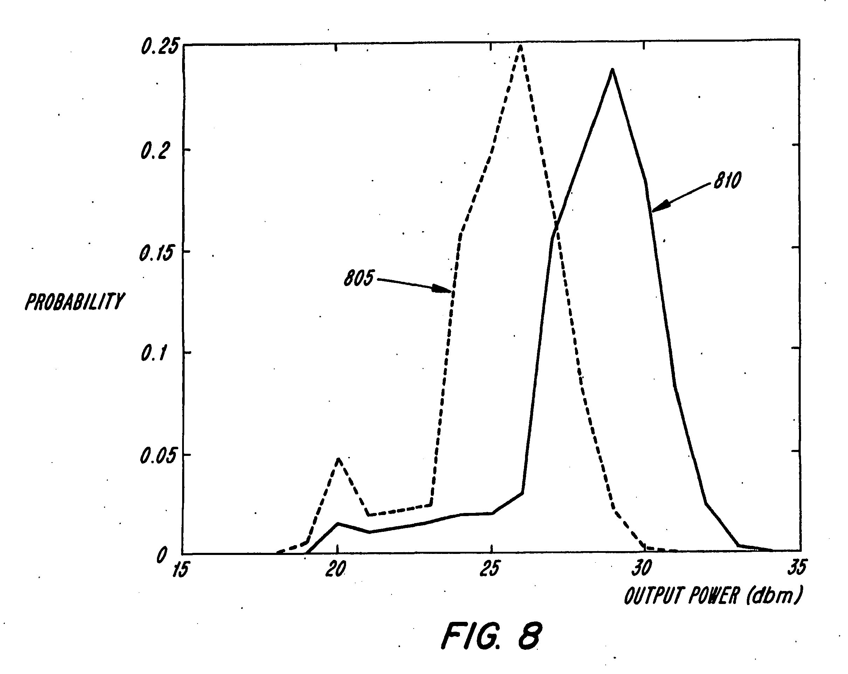

FIG. 8 illustrates a simulated histogram of power levels for EFR mobile stations and for AMR mobile stations EFR mobile station power level 810 and AMR mobile station power level 805, respectively. The AMR and EFR connections both aim towards the same perceived quality measure. It can be seen from FIG. 8 that there is a significant difference in output power (horizontal-axis) between the EFR and the AMP connections. It is this difference that can be translated into a capacity increase using exemplary embodiments of the present invention. In particular, for handling associated control signaling information, the performance of the associated control channels will remain at the performance level of a system in which only EFR mobile stations are served.

Although the present invention has been described with reference to a GSM cellular communication system and, in particular, to an AMR voice codec, those of ordinary skill in the art will recognize that exemplary embodiments of the present invention can provide the same advantages in other types of communication systems, and is squally applicable to other types of codecs and features that improve communication link robustness.

## Claims

1. A method for receiver-**characterized** power setting in a cellular communication system, comprising the steps of:
setting (300) a first transmission power for a first connection with a first type of mobile station, wherein the first connection targets a first radio channel quality; and
setting (305) a second transmission power for a second connection with a second type of mobile station, wherein the second connection targets a second radio channel quality,
wherein the first type of mobile station uses a first type of voice codec unit that is less robust to poor radio channel quality than a second type of voice codec unit used by the second type of mobile station, **characterized by**
setting the first and second transmission powers according to at least the type of voice codec unit used by the first and second types of mobile stations, respectively, when transmitting speech.

2. The method of claim 1, wherein said second radio channel quality is substantially lower than said first radio channel quality.

3. The method of claim 1, wherein the first and second radio channel qualities correspond to a desired carrier-to-interference (C/1) ratio.

4. The method of claim 1, wherein the first and second types of mobile stations share substantially the same frequency band for the first and second connections, respectively.

5. The method of claim 1, wherein frequency hopping allocations are used for the first and second connections.

6. The method of claim 1, wherein the second radio channel quality is mapped from a corresponding first radio channel quality.

7. The method of claim 6, wherein a user-perceived quality of said second radio channel quality for said second type of mobile station corresponds to substantially the same user-perceived quality of the first radio channel quality for said first type of mobile station.

8. The method of claim 1, wherein a minimum power used for the second connection with the second type of mobile station is lower than a minimum power used for the first connection with the first type of mobile station.

9. The method of claim 1, wherein the first type of voice codec unit used by the first type of mobile station is an Enhanced Full Rate (EFR) voice codec unit.

10. The method of claim 1, where the second type of voice codec unit used by the second type of mobile station is an Adaptive Multi-Rate (AMR) voice codec unit.

11. The method of claim 1, further comprising the step of:
setting transmission powers for communicating associated control signaling information with said second type of mobile station to substantially the same transmission powers used for communicating associated control signaling information with said first type of mobile station.

12. The method of claim 11, wherein the transmission powers for communicating associated control signaling information with said second type of mobile station correspond to a maximum allowed power of said first type of mobile station.

13. The method of claim 12, wherein said associated control signaling information includes handover signaling information.

14. The method of claim 1, further comprising the steps of:
setting transmission powers for communicating associated control signaling information with said second type of mobile station on downlink connections to substantially the same transmission powers used for communicating associated control signaling information with said first type of mobile station on downlink connections; and
setting transmission powers for communicating associated control signaling information with said first and second types of mobile stations on uplink connections according to at least a type of voice codec unit used by the first and second types of mobile stations, respectively.

15. The method of claim 14, wherein said associated control signaling information includes handover signaling information.

16. A system for receiver-**characterized** power setting in a cellular communication system (200), comprising:
a first type of mobile station (505), wherein the first type of mobile station includes a first type of voice codec unit (404), wherein a first connection with the first type of mobile station targets a first radio channel quality;
a second type of mobile station (515), wherein the second type of mobile station includes a second type of voice codec unit (402), wherein a second connection with the second type of mobile station targets a second radio channel quality,
wherein the first type of voice codec unit of the first type of mobile station is less robust to poor radio channel quality than the second type of voice codec unit of the second type of mobile station, **characterized in that** the transmission powers for the first and second connections are set according to at least the type of voice codec unit used by the first and second types of mobile stations, respectively, when transmitting speech.

17. The system of claim 16, further comprising:
a base station that communicates with the first and second types of mobile stations.

18. The system of claim 16, wherein the second radio channel quality is substantially lower than the first radio channel quality.

19. The system of claim 16, wherein the first and second radio channel qualities correspond to a desired carrier-to-interference (C/I) ratio.

20. The system of claim 16, wherein the first and second types of mobile stations share substantially the same frequency band for the first and second connections, respectively.

21. The system of claim 16, wherein frequency hopping allocations are used for the first and second connections.

22. The system of claim 16, wherein the second radio channel quality is mapped from a corresponding first radio channel quality.

23. The system of claim 22, wherein a user-perceived quality of said second radio channel quality for said second type of mobile station corresponds to substantially the same user-perceived quality of the first radio channel quality for said first type of mobile station.

24. The system of claim 16, wherein a minimum power used for the second connection with the second type of mobile station is lower than a minimum power used for the first connection with the first type of mobile station.

25. The system of claim 16, wherein the first type of voice codec unit used by the first type of mobile station is an Enhanced Full Rate (EFR) voice codec unit.

26. The system of claim 16, where the second type of voice codec unit used by the second type of mobile station is an Adaptive Multi-Rate (AMR) voice codec unit.

27. The system of claim 16, wherein transmission powers for communicating associated control signaling information with said second type of mobile station are set to substantially the same transmission powers used for communicating associated control signaling information with said first type of mobile station.

28. The system of claim 27, wherein the transmission powers for communicating associated control signaling information with said second type of mobile station correspond to a maximum allowed power of said first type of mobile station.

29. The system of claim 28, wherein said associated control signaling information includes handover signaling information.

30. The system of claim 29, wherein the transmission powers for communicating associated control signaling information with said second type of mobile station on downlink connections are set to substantially the same transmission powers used for communicating associated control signaling information with said first type of mobile station on downlink connections, and
wherein transmission powers for communicating associated control signaling information with said first and second types of mobile stations on uplink connections are set according to at least a type of voice codec unit used by the first and second types of mobile stations, respectively.

31. The system of claim 30, wherein said associated control signaling information includes handover signaling information.

32. A power control unit (600) for receiver-**characterized** power setting in a cellular communication system, comprising:
means for setting a first transmission power for a first connection with a first type of mobile station, wherein the first connection targets a first radio channel quality; and
means for setting a second transmission power for a second connection with a second type of mobile station, wherein the second connection targets a second radio channel quality,
wherein the first type of mobile station is adapted to use a first type of voice codec unit that is less robust to poor radio channel quality than a second type of voice codec unit used by the second type of mobile station, **characterized by**
means for setting the first and second transmission powers according to at least the type of voice codec unit used by the first and second types of mobile stations, respectively, when transmitting speech.

33. The unit of claim 32, further comprising means for applying a minimum power for the second connection that is lower than a minimum power used for the first connection.

34. The unit of claim 32 or 33, comprising means for setting transmission power for a Enhanced Full Rate (EFR) voice codec unit.

35. The unit of any of claims 32 -3 4, comprising means for setting transmission power for an Adaptive Multi-Rate (AMR) voice codec unit.

36. The unit of any of claims 32 - 35, further comprising:
means for setting transmission powers for communicating associated control signaling information with said second type of mobile station to substantially the same transmission powers used for communicating associated control signaling information with said first type of mobile station.

37. The unit of claim 36, wherein the transmission powers for communicating associated control signaling information with said second type of mobile station correspond to a maximum allowed power of said first type of mobile station.

38. The unit of claim 32, further comprising:
means for setting transmission powers for communicating associated control signaling information with said second type of mobile station on downlink connections to substantially the same transmission powers used for communicating associated control signaling information with said first type of mobile station on downlink connections; and
means for setting transmission powers for communicating associated control signaling information with said first and second types of mobile stations on uplink connections according to at least a type of voice codec unit used by the first and second types of mobile stations, respectively.

## Patentansprüche

1. Verfahren zum empfängerabhängigen Einstellen der Stärke in einem zellularen Kommunikationssystem, umfassend folgende Schritte:
Einstellen (300) einer ersten Übertragungsstärke für eine erste Verbindung mit einem ersten Typ einer Mobilstation, wobei die erste Verbindung eine erste Funkkanal-Qualität anstrebt; und
Einstellen (305) einer zweiten Übertragungsstärke für eine zweite Verbindung mit einem zweiten Typ einer Mobilstation, wobei die zweite Verbindung eine zweite Funkkanal-Qualität anstrebt;
wobei der erste Typ einer Mobilstation einen ersten Typ einer Sprach-Codec-Einheit benutzt, der sensibler gegenüber schlechter Funkkanal-Qualität ist als ein zweiter Typ einer Sprach-Codec-Einheit, der vom zweiten Typ einer Mobilstation benutzt wird, **gekennzeichnet durch**
das Einstellen der ersten und zweiten Übertragungsstärke gemäss mindestens der Sprach-Codec-Einheit, die während der Sprachübertragung vom jeweils ersten und zweiten Typ einer Mobilstation benutzt wird.

2. Verfahren nach Anspruch 1, wobei die zweite Funkkanal-Qualität wesentlich niedriger ist als die erste Funkkanal-Qualität.

3. Verfahren nach Anspruch 1, wobei die erste und zweite Funkkanal-Qualität einem gewünschten Verhältnis Trägersignal zu Interferenzsignal (C/I) entspricht.

4. Verfahren nach Anspruch 1, wobei der erste und zweite Typ einer Mobilstation im Wesentlichen dasselbe Frequenzband für die jeweils erste und zweite Verbindung teilen.

5. Verfahren nach Anspruch 1, wobei Frequenzsprungzuweisungen für die erste und zweite Verbindung benutzt werden.

6. Verfahren nach Anspruch 1, wobei die zweite Funkkanal-Qualität von einer entsprechenden ersten Funkkanal-Qualität gemappt wird.

7. Verfahren nach Anspruch 6, wobei eine vom Benutzer wahrgenommene Qualität der zweiten Funkkanal-Qualität für den zweiten Typ einer Mobilstation im Wesentlichen derselben vom Benutzer wahrgenommenen Qualität der ersten Funkkanal-Qualität für den ersten Typ einer Mobilstation entspricht.

8. Verfahren nach Anspruch 1, wobei eine minimale Stärke, die für die zweite Verbindung mit dem zweiten Typ einer Mobilstation benutzt wird, niedriger ist als eine minimale Stärke, die für die erste Verbindung mit dem ersten Typ einer Mobilstation benutzt wird.

9. Verfahren nach Anspruch 1, wobei der erste Typ einer Sprach-Codec-Einheit, der vom ersten Typ einer Mobilstation benutzt wurde, eine Enhanced Full Rate (EFR) Sprach-Codec-Einheit ist.

10. Verfahren nach Anspruch 1, wobei der zweite Typ einer Sprach-Codec-Einheit, der vom zweiten Typ einer Mobilstation benutzt wurde, eine Adaptive Multi-Rate (AMR) Sprach-Codec-Einheit ist.

11. Verfahren nach Anspruch 1, ferner umfassend folgende Schritte:
Einstellen von Übertragungsstärken, zum Übermitteln von assoziierte Kontroll-Signalisierungsinformation an den zweiten Typ einer Mobilstation mit im Wesentlichen denselben Übertragungsstärken, die zum Übermitteln der assoziierten Kontroll-Signafisierungsinformation an den ersten Typ einer Mobilstation benutzt wird.

12. Verfahren nach Anspruch 11, wobei die Übertragungsstärken zum Übermitteln von assoziierter Kontroll-Signafisierungsinformation an den zweiten Typ einer Mobilstation einer maximal erlaubten Stärke des ersten Typs einer Mobilstation entsprechen.

13. Verfahren nach Anspruch 12, wobei die assoziierte Kontroll-Signalisierungsinformation eine Handover-Signalisierungsinformation einschliesst.

14. Verfahren nach Anspruch 1, ferner umfassend die folgenden Schritte:
Einstellen von Übertragungsstärken zum Übermitteln von assoziierte Kontroll-Signalisierungsinformation an den zweiten Typ einer Mobilstation auf Abwärtsverbindungen mit im Wesentlichen denselben Übertragungsstärken, die zum Übermitteln der assoziierten Kontroll-Signalisierungsinformation an den ersten Typ einer Mobilstation auf Abwärtsverbindungen benutzt werden; und
Einstellen von Übertragungsstärken zum Übermitteln von assoziierte Kontroll-Signalisierungsinformation an den ersten und zweiten Typ einer Mobilstation auf Aufwärtsverbindungen gemäss mindestens einem Typ einer Sprach-Codec-Einheit, der vom jeweils ersten und zweiten Typ einer Mobilstation benutzt wird.

15. Verfahren nach Anspruch 14, wobei die assoziierte Kontroll-Signalisierungsinformation eine Handover-Signalisierungsinformation einschliesst.

16. System zum empfängerabhängigen Einstellen der Stärke in einem zellularen Kommunikationssystem (200), umfassend:
einen ersten Typ einer Mobilstation (505), wobei der erste Typ einer Mobilstation einen ersten Typ einer Sprach-Codec-Einheit (404) einschliesst, wobei eine erste Verbindung mit dem ersten Typ einer Mobilstation eine erste Funkkanal-Qualität anstrebt;
einen zweiten Typ einer Mobilstation (515), wobei der zweite Typ einer Mobilstation einen zweiten Typ einer Sprach-Codec-Einheit (402) einschliesst, wobei eine zweite Verbindung mit dem zweiten Typ einer Mobilstation eine zweite Funkkanal-Qualität anstrebt,
wobei der erste Typ einer Sprach-Codec-Einheit des ersten Typs einer Mobilstation sensibler gegenüber schlechter Funkkanal-Qualität ist als der zweite Typ einer Sprach-Codec-Einheit des zweiten Typs einer Mobilstation, **dadurch gekennzeichnet, dass** die Übertragungsstärken für die erste und zweite Verbindung gemäss mindestens dem Typ einer Sprach-Codec-Einheit, die während der Sprachübertragung vom jeweils ersten und zweiten Typ einer Mobilstation benutzt wird, eingestellt wird.

17. System nach Anspruch 16, ferner umfassend:
eine Basistation, die mit dem ersten und zweiten Typ einer Mobilstation in Verbindung steht.

18. System nach Anspruch 16, wobei die zweite Funkkanal-Qualität im Wesentlichen niedriger ist als die erste Funkkanal-Qualität.

19. System nach Anspruch 16, wobei die erste und zweite Funkkanal-Qualität einem gewünschten Verhältnis Trägersignal zu Interferenzsignal (C/I) entspricht.

20. System nach Anspruch 16, wobei der erste und zweite Typ einer Mobilstation im Wesentlichen dasselbe Frequenzband für die jeweils erste und zweite Verbindung teilen.

21. System nach Anspruch 16, wobei die Frequenzsprungzuweisungen für die erste und zweite Verbindung benutzt werden.

22. System nach Anspruch 16, wobei die zweite Funkkanal-Qualität von der entsprechenden ersten Funkkanal-Qualität gemappt wird.

23. System nach Anspruch 22, wobei eine vom Benutzer wahrgenommene Qualität der zweiten Funkkanal-Qualität für den zweiten Typ einer Mobilstation im Wesentlichen derselben vom Benutzer wahrgenommenen Qualität der ersten Funkkanal-Qualität für den ersten Typ einer Mobilstation entspricht.

24. System nach Anspruch 16, wobei eine minimale Stärke, die für die zweite Verbindung mit dem zweiten Typ einer Mobilstation benutzt wird, niedriger ist als eine minimale Stärke, die für die erste Verbindung mit dem ersten Typ einer Mobilstation benutzt wird.

25. System nach Anspruch 16, wobei der erste Typ einer Sprach-Codec-Einheit, der vom ersten Typ einer Mobilstation benutzt wird, ein Enhanced Full Rate (EFR) Sprach-Codec-Einheit ist.

26. System nach Anspruch 16, wobei der zweite Typ einer Sprach-Codec-Einheit, der vom zweiten Typ einer Mobilstation benutzt wird, ein Adaptive Multi-Rate (AMR) Sprach-Codec-Einheit ist.

27. System nach Anspruch 16, wobei die Übertragungsstärken zum Übermitteln von assoziierte Kontroll-Signalisierungsinformation an den zweiten Typ einer Mobilstation auf im Wesentlichen dieselben Übertragungsstärken eingestellt werden, die zum Übermitteln der assoziierten Kontroll-Signalisierunsinformation an den ersten Typ einer Mobilstation benutzt werden.

28. System nach Anspruch 27, wobei die Übertragungsstärken zum Übermitteln von assoziierte Kontroll-Signafisierungsinformation an den zweiten Typ einer Mobilstation einer maximal erlaubten Stärke des ersten Typs einer Mobilstation entspricht.

29. System nach Anspruch 28, wobei die assoziierte Kontroll-Signalisierungsinformation eine Handover-Signalisierungsinformation einschliesst.

30. System nach Anspruch 29, wobei die Übertragungsstärken zum Übermitteln von assoziierte Kontroll-Signalisierungsinformation an den zweiten Typ einer Mobilstation auf Abwärtsverbindungen auf im Wesentlichen dieselben Übertragungsstärken, die zum Übermitteln von assoziierte Kontroll-Signalisierungsinformation an den ersten Typ einer Mobilstation auf Abwärtsverbindungen benutzt werden, eingestellt werden, und
wobei die Übertragungsstärken zum Übermitteln von assoziierte Kontroll-Signalisierungsinformation an den ersten und zweiten Typ einer Mobilstation auf Aufwärtsverbindungen gemäss mindestens einem Typ einer Sprach-Codec-Einheit, die vom jeweils ersten und zweiten Typ einer Mobilstation benutzt wird, eingestellt wird.

31. System nach Anspruch 30, wobei die assoziierte Kontroll-Signalisierungsinformation eine Handover-Signalisierungsinformation einschliesst.

32. Stärkesteuerungseinheit (600) zum empfängerabhängigen Einstellen der Stärke in einem zellularen Kommunikationssystem, umfassend:
Mittel zum Einstellen einer ersten Übertragungsstärke für eine erste Verbindung mit einem ersten Typ einer Mobilstation, wobei die erste Verbindung eine erste Funkkanal-Qualität anstrebt; und
Mittel zum Einstellen einer zweiten Übertragungsstärke für eine zweite Verbindung mit einem zweiten Typ einer Mobilstation, wobei die zweite Verbindung eine zweite Funkkanal-Qualität anstrebt,
wobei der erste Typ einer Mobilstation angepasst ist, um einen ersten Typ einer Sprach-Codec-Einheit zu benutzen, der sensibler gegenüber schlechter Funkkanal-Qualität ist als ein zweiter Typ einer Sprach-Codec-Einheit, der vom zweiten Typ einer Mobilstation benutzt wird, **gekennzeichnet durch**
Mittel zum Einstellen einer ersten und zweiten Übertragungsstärke gemäss mindestens dem Typ der Sprach-Codec-Einheit, der während der Sprachübermittlung vom jeweils ersten und zweiten Typ einer Mobilstation benutzt wird.

33. Einheit nach Anspruch 32, ferner umfassend Mittel zum Anwenden einer minimalen Stärke für die zweite Verbindung, die niedriger ist als eine minimale Stärke, die für die erste Verbindung benutzt wird.

34. Einheit nach Anspruch 32 oder 33, umfassend Mittel zum Einstellen der Übertragungsstärke für eine Enhanced Full Rate (EFR) Sprach-Codec-Einheit.

35. Einheit nach Anspruch 32 bis 34, umfassend Mittel zum Einstellen einer Übertragungsstärke für eine Adaptive Multi-Rate (AMR) Sprach-Codec-Einheit.

36. Einheit nach irgendeinem der Ansprüche 32 bis 35, ferner umfassend:
Mittel zum Einstellen von Übertragungsstärken zum Übermitteln von assoziierte Kontroll-Signalisierungsinformation an den zweiten Typ einer Mobilstation mit im Wesentlichen denselben Übertragungsstärken, die zum Übermitteln der assoziierten Kontroll-Signafisierungsinformation an den ersten Typ einer Mobilstation benutzt werden.

37. Einheit nach Anspruch 36, wobei die Übertragungsstärken zum Übermitteln der assoziierten Kontroll-Signafisierungsinformation an den zweiten Typ einer Mobilstation einer maximal erlaubten Stärke des ersten Typs einer Mobilstation entsprechen.

38. Einheit nach Anspruch 32, ferner umfassend:
Mittel zum Einstellen von Übertragungsstärken zum Übermitteln von assoziierte Kontroll-Signalisierungsinformation an den zweiten Typ einer Mobilstation auf Abwärtsverbindungen mit im Wesentlichen denselben Übertragungsstärken, die zum Übermitteln von assoziierte Kontroll-Signalisierungsinformation an den ersten Typ einer Mobilstation auf Abwärtsverbindungen benutzt werden, und
Mittel zum Einstellen von Übertragungsstärken zum Übermitteln von assoziierte Kontroll-Signalisierungsinformation an den ersten und zweiten Typ einer Mobilstation auf Aufwärtsverbindungen gemäss mindestens einem Typ einer Sprach-Codec-Einheit, die vom jeweils ersten und zweiten Typ einer Mobilstation benutzt wird.

## Revendications

1. Procédé pour régler la puissance en fonction du récepteur dans un système de communication cellulaire, comprenant les étapes de:
réglage (300) d'une première puissance de transmission pour une première connection avec un premier type de station mobile, la première connection ciblant une première qualité de canal radio; et
réglage (305) d'une deuxième puissance de transmission pour une deuxième connection avec un deuxième type de station mobile, la deuxième connection ciblant une deuxième qualité de canal radio,
dans lequel le premier type de station mobile utilise un premier type d'unité de codec vocal qui est plus sensible à une mauvaise qualité de canal radio qu'un deuxième type d'unité de codec vocal utilisé par le deuxième type de station mobile, **caractérisé par**
le réglage des première et deuxième puissances de transmission selon au moins le type d'unité de codec vocal utilisé par les premier et deuxième types de stations mobiles, respectivement, lors de la transmission vocale.

2. Procédé selon la revendication 1, dans lequel ladite deuxième qualité de canal radio est substantiellement plus basse que ladite première qualité de canal radio.

3. Procédé selon la revendication 1, dans lequel la première et la deuxième qualité de canal radio correspondent à un rapport porteuse sur interférence (C/I) désiré.

4. Procédé selon la revendication 1, dans lequel le premier et le deuxième type de stations mobiles partagent substantiellement la même bande de fréquence pour les première et deuxième connections, respectivement.

5. Procédé selon la revendication 1, dans lequel des allocations de saut de fréquence sont utilisées pour les première et deuxième connections.

6. Procédé selon la revendication 1, dans lequel la deuxième qualité de canal radio est mappée à partir d'une première qualité de canal radio correspondante.

7. Procédé selon la revendication 6, dans lequel une qualité perçue par l'utilisateur de ladite deuxième qualité de canal radio pour ledit deuxième type de station mobile correspond substantiellement à la même qualité perçue par l'utilisateur de la première qualité de canal radio pour ledit premier type de station mobile.

8. Procédé selon la revendication 1, dans lequel une puissance minimum utilisée pour la deuxième connection avec le deuxième type de station mobile est plus basse qu'une puissance minimum utilisée pour la première connection avec le premier type de station mobile.

9. Procédé selon la revendication 1, dans lequel le premier type d'unité de codec vocal utilisé par le premier type de station mobile est une unité de codec vocal "plein débit amélioré" (Enhanced Full Rate, EFR).

10. Procédé selon la revendication 1, dans lequel le deuxième type d'unité de codec vocal utilisé par le deuxième type de station mobile est une unité de codec vocal Adaptive Multi-Rate (AMR).

11. Procédé selon la revendication 1, comprenant en outre l'étape de:
réglage des puissances de transmission pour communiquer l'information de signalisation de commande associée audit deuxième type de station mobile substantiellement aux mêmes puissances de transmission que celles utilisées pour communiquer audit premier type de station mobile l'information de signalisation de commande associée.

12. Procédé selon la revendication 11, dans lequel les puissances de transmission pour communiquer l'information de signalisation de commande associée au deuxième type de station mobile correspondent à une puissance maximum autorisée dudit premier type de station mobile.

13. Procédé selon la revendication 12, dans lequel ladite information de signalisation de commande associée inclut une information de signalisation de transfert intercellulaire.

14. Procédé selon la revendication 1, comprenant en outre les étapes de:
réglage des puissances de transmission pour communiquer au deuxième type de station mobile l'information de signalisation de commande associée sur des connections de liaison descendante à des puissances de transmission qui sont substantiellement les mêmes que celles utilisées pour communiquer l'information de signalisation de commande associée audit premier type de station mobile sur des connections de liaison descendante; et
réglage des puissances de transmission pour communiquer auxdits premier et deuxième types de station mobile l'information de signalisation de commande associée sur des connections de liaison montante selon au moins un type d'unité de codec vocal utilisé par les premier et deuxième types de station mobile, respectivement.

15. Procédé selon la revendication 14, dans lequel ladite information de signalisation de commande associée inclut une information de signalisation de transfert intercellulaire.

16. Système pour régler la puissance en fonction du récepteur dans un système de communication cellulaire (200), comprenant:
un premier type de station mobile (505), dans lequel le premier type de station mobile inclut un premier type d'unité de codec vocal (404), une première connection avec le premier type de station mobile ciblant une première qualité de canal radio;
un deuxième type de station mobile (515) dans lequel le deuxième type de station mobile inclut un deuxième type d'unité de codec vocal (402), une deuxième connection avec le deuxième type de station mobile ciblant une deuxième qualité de canal radio,
dans lequel le premier type d'unité de codec vocal du premier type de station mobile est plus sensible à une mauvaise qualité de canal radio que le deuxième type d'unité de codec vocal du deuxième type de station mobile, **caractérisé en ce que** les puissances de transmission pour les première et deuxième connections sont réglées selon au moins le type d'unité de codec vocal utilisé par les premier et deuxième types de station mobile, respectivement, lors de la transmission vocale.

17. Système selon la revendication 16, comprenant en outre:
une station de base qui communique avec les premier et deuxième types de station mobile.

18. Système selon la revendication 16, dans lequel la deuxième qualité de canal radio est substantiellement plus basse que la première qualité de canal radio.

19. Système selon la revendication 16, dans lequel les première et deuxième qualités de canal radio correspondent à un rapport porteuse sur interférence (C/I) désiré.

20. Système selon la revendication 16, dans lequel les premier et deuxième types de sation mobile partagent substantiellement la même bande de fréquence pour les première et deuxième connections, respectivement.

21. Système selon la revendication 16, dans lequel des allocations de saut de fréquence sont utilisées pour les première et deuxième connections.

22. Système selon la revendication 16, dans lequel la deuxième qualité de canal radio est mappée à partir d'une première qualité de canal radio correspondante.

23. Système selon la revendication 22, dans lequel une qualité perçue par un utilisateur de ladite deuxième qualité de canal radio pour ledit deuxième type de station mobile correspond substantiellement à la même qualité perçue par un utilisateur de la première qualité de canal radio pour ledit premier type de station mobile.

24. Système selon la revendication 16, dans lequel une puissance minimum utilisée pour la deuxième connection avec le deuxième type de station mobile est plus basse qu'une puissance minimum utilisée pour la première connection avec le premier type de station mobile.

25. Système selon la revendication 16, dans lequel le premier type d'unité de codec vocal utilisé par le premier type de station mobile est une unité de codec vocal Enhanced Full Rate (EFR).

26. Système selon la revendication 16, dans lequel le deuxième type d'unité de codec vocal utilisé par le deuxième type de station mobile est une unité de codec vocal Adaptive Multi-Rate (AMR).

27. Système selon la revendication 16, dans lequel les puissances de transmission pour communiquer audit deuxième type de station mobile l'information de signalisation de commande associée sont réglées substantiellement aux mêmes puissances de transmission que celles utilisées pour communiquer l'information de signalisation de commande associée audit premier type de station mobile.

28. Système selon la revendication 27, dans lequel les puissances de transmission pour communiquer au deuxième type de station mobile l'information de signalisation de commande associée correspond à une puissance maximum autorisée dudit premier type de station mobile.

29. Système selon la revendication 28, dans lequel ladite information de signalisation de commande associée inclut une information de transfert cellulaire.

30. Système selon la revendication 29, dans lequel les puissances de transmission pour communiquer au deuxième type de station mobile l'information de signalisation de commande associée sur des connections de liaison descendante sont réglées substantiellement aux mêmes puissances de transmission que celles utilisées pour communiquer audit premier type de station mobile l'information de signalisation de commande associée sur des connections de liaison descendante, et
dans lequel les puissances de transmission pour communiquer aux premier et deuxième types de station mobile l'information de signalisation de commande associée sur des connections de liaison montante sont réglées selon au moins un type d'unité de codec vocal utilisé par les premier et deuxième types de stations mobiles, respectivement.

31. Système selon la revendication 30, dans lequel ladite information de signalisation de commande associée inclut une information de signalisation de transfert intercellulaire.

32. Unité de commande de puissance (600) pour régler la puissance en fonction du récepteur dans un système de communication cellulaire, comprenant:
des moyens pour régler une première puissance de transmission pour une première connection avec un premier type de station mobile, la première connection ciblant une première qualité de canal radio; et
des moyens pour régler une deuxième puissance de transmission pour une deuxième connection avec un deuxième type de station mobile, la deuxième connection ciblant une deuxième qualité de canal radio,
dans laquelle le premier type de station mobile est adapté pour utiliser un premier type d'unité de codec vocal qui est plus sensible à une mauvaise qualité de canal radio qu'un deuxième type d'unité de codec vocal utilisé par le deuxième type de station mobile, **caractérisée par**
des moyens pour régler les première et deuxième puissances de transmission selon au moins le type d'unité de codec vocal utilisé par les premier et deuxième types de station mobile, respectivement, lors de la transmission vocale.

33. Unité selon la revendication 32, comprenant en outre des moyens pour appliquer une puissance minimum pour la deuxième connection qui est plus basse qu'une puissance minimum utilisée pour la première connection.

34. Unité selon la revendication 32 ou 33, comprenant des moyens pour régler la puissance de transmission pour une unité de codec vocal Enhanced Full Rate (EFR).

35. Unité selon l'une quelconque des revendications 32-34, comprenant des moyens pour régler la puissance de transmission pour une unité de codec vocal Adaptive Multi-Rate (AMR).

36. Unité selon l'une quelconque des revendications 32 à 35, comprenant en outre:
des moyens pour régler les puissances de transmission pour communiquer au second type de station mobile l'information de signalisation de commande associée substantiellement aux mêmes puissances de transmission que celles utilisées pour communiquer audit premier type de station mobile l'information de signalisation de commande associée.

37. Unité selon la revendication 36, dans laquelle les puissances de transmission pour communiquer audit deuxième type de station mobile l'information de signalisation de commande associée correspond à une puissance maximum autorisée dudit premier type de station mobile.

38. Unité selon la revendication 32, comprenant en outre:
des moyens pour régler les puissances de transmission pour communiquer audit deuxième type de station mobile l'information de signalisation de commande associée sur des connections de liaison descendante substantiellement aux mêmes puissances de transmission que celles utilisées pour communiquer audit premier type de station mobile l'information de signalisation de liaison descendante; et
des moyens pour régler les puissances de transmission pour communiquer auxdits premier et deuxième types de station mobile l'information de signalisation de commande associée sur des connections de liaison montante selon au moins un type d'unité de codec vocal utilisé par les premier et deuxième types de station mobile respectivement.
